# DEMANDE DE BREVET EUROPEEN

(11) **EP 2 381 216 A1**
(43) Date de publication de la demande: **26.10.2011**
(21) Numéro de dépôt: 11290145.9
(22) Date de dépôt: 22.03.2011
(51) Int. Cl.: G01B 17/02, G01M 15/02, G05B 17/02

(54) **Système pour l'etude d'un groupe motopropulseur d'un véhicule hybride**

(30) Priorité: 21.04.2010 FR 1001692
(71) Demandeur: IFP Energies nouvelles, 92852 Rueil-Malmaison Cedex (FR)
(72) Inventeur: Malaize, Jérémy, 91700 Saint-Geneviève-des-Bois (FR); Sciarretta, Antonio, 92500 Rueil-Malmaison (FR); Touzani, Youssef, 92310 Sèvres (FR); Bui Tran, Van, 91300 Massy (FR)

(57) **Abrégé**

- Système d'étude d'un groupe motopropulseur pour un véhicule hybride équipé d'un moteur thermique et d'un moteur électrique de traction, comportant :
- un premier moteur électrique (M1) ;
- des moyens (S1, S2) pour simuler en temps réel le fonctionnement du moteur thermique et pour simuler les moyens de commande du moteur thermique ;
- des moyens (PTRI, M2) pour reproduire mécaniquement le régime issu des moyens de simulation sur l'arbre de rotation du premier moteur électrique.

## Description

La présente invention concerne le domaine de l'analyse et la conception de moteur pour véhicule. En particulier, l'invention concerne un système d'étude d'un groupe motopropulseur, de type banc moteur, pour un véhicule hybride équipé d'un moteur thermique et d'un moteur électrique de traction.

Le groupe motopropulseur d'un véhicule hybride est composé essentiellement d'un moteur thermique et d'un moteur électrique. Le rôle de ce dernier est plus ou moins important dans sa contribution à la propulsion, selon le degré d'hybridation du véhicule ("stop/start", "mild hybrid", "full hybrid",...).

Usuellement on appelle *"banc GMP hybride"* le moyen expérimental permettant de faire des essais sur les groupes motopropulseurs (GMP) de véhicules hybrides. Les moteurs thermiques et électriques que l'on monte au banc GMP hybride sont des moteurs susceptibles d'entrer dans la composition réelle du véhicule. Ce sont ainsi des moteurs à l'échelle 1.

Ces bancs constituent des investissements lourds en termes de coûts et d'immobilisations. En outre, leur réalisation a comme pré-requis le fait que le GMP de véhicule hybride est complètement fixé, en termes d'architecture et en termes de composants. Ainsi la comparaison d'architectures différentes ou de différentes technologies de composants n'est pas réalisable sur ces bancs.

### Le système selon l'invention

L'objet de l'invention concerne un système d'étude d'un groupe motopropulseur, de type banc moteur, pour un véhicule hybride, permettant de s'affranchir des inconvénients des *"bancs GMP hybrides".* Le système y parvient en combinant un premier moteur électrique à des moyens logiciels pour simuler le moteur thermique.

Le système selon l'invention comporte ainsi :
- un premier moteur électrique (M1) ;
- des moyens (S1, S2) pour simuler en temps réel un fonctionnement du moteur thermique et pour simuler des moyens de commande du moteur thermique ;
- des moyens (PTRI, M2) pour reproduire mécaniquement un régime issu des moyens de simulation sur un arbre de rotation du premier moteur électrique.

Selon l'invention, les moyens pour reproduire un régime peuvent comporter un second moteur électrique (M2) muni d'un second arbre de rotation solidaire de l'arbre de rotation du premier moteur électrique, et des moyens d'interfaçage (PTRI) en temps réel entre les moyens de simulation et les premier et second moteurs électriques.

Selon l'invention, les moyens d'interfaçage (PTRI) peuvent comporter :
- des moyens pour transmettre au premier moteur électrique (M1) une demande de couple désiré pour le premier moteur électrique (M1) ;
- des moyens pour transmettre à un simulateur de transmission du véhicule (S3) une mesure d'un couple réellement fourni par le moteur électrique (M1) ;
- des moyens pour transmettre au second moteur électrique (M2) une demande de régime de rotation issu dudit simulateur de transmission du véhicule (S3).

Selon un mode de réalisation, les moyens d'interfaçage (PTRI) comportent un premier moyen électronique de commande (OND1) connecté audit premier moteur électrique (M1), et un second moyen électronique de commande (OND3) connecté audit second moteur électrique (M2). Les moyens électroniques de commande peuvent comporter au moins un onduleur.

Selon un mode de réalisation, les moyens de simulation en temps réel comportent un ordinateur muni d'un système d'exploitation temps réel, un superviseur de tâches temps réel, et des modules logiciels simulant en temps réel le fonctionnement dudit moteur thermique (S1), lesdits moyens de commande dudit moteur thermique (S2), une transmission dudit véhicule (S3) et une dynamique dudit véhicule (S4).

Selon l'invention, au moins un des axes de rotation des moteurs électriques peut être équipé d'un couplemètre (CP) permettant de mesurer le couple mécanique réel sur les axes de rotation.

Selon un mode de réalisation préférentiel, le premier moteur électrique (M1) correspond à une échelle réduite du moteur électrique de traction, les moyens (PTRI, M2) pour reproduire un régime comportent alors des moyens logiciels de prise en compte de la mise à l'échelle du moteur électrique de traction. Le premier moteur électrique (M1) peut être à une échelle réduite d'un facteur de réduction de l'ordre de 10 à 20 par rapport au moteur électrique de traction. Il peut s'agir d'un moteur électrique de puissance de l'ordre de 2 kW.

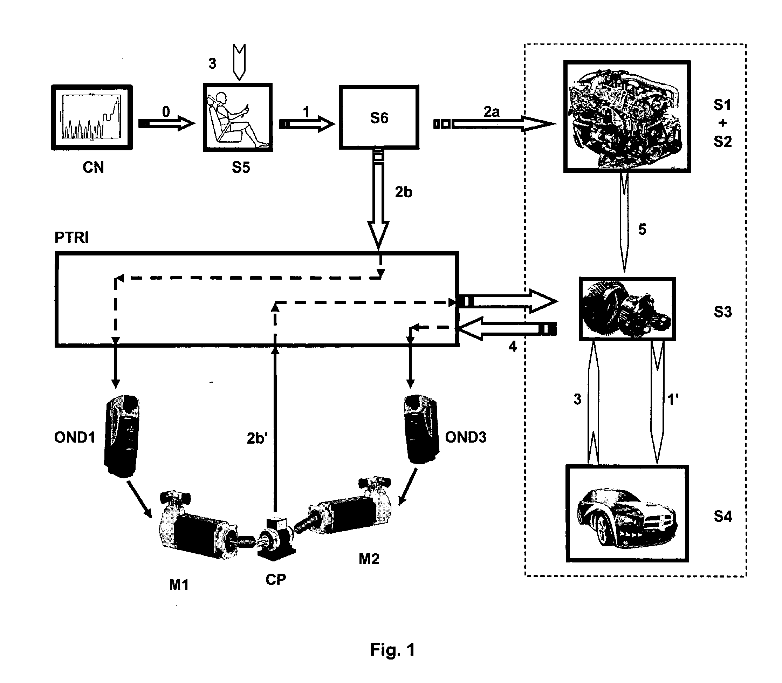

D'autres caractéristiques et avantages du système d'étude d'un groupe motopropulseur selon l'invention, apparaîtront à la lecture de la description ci-après d'exemples non limitatifs de réalisations, en se référant à la figure 1 annexée.

La figure 1 illustre le système selon l'invention, pour étudier un groupe motopropulseur (GMP) d'un véhicule hybride.

### Description détaillée du système

Le groupe motopropulseur d'un véhicule hybride comporte un moteur thermique et un moteur électrique. Lors du fonctionnement d'un véhicule hybride réel, le moteur électrique de traction développe un couple sur son arbre de rotation. Sur celui-ci viennent s'ajouter algébriquement, après passage au travers de différents organes mécaniques de démultiplication, le couple développé par le moteur thermique et le couple résistant imposé par le véhicule.

Le système d'étude selon l'invention, qui constitue un banc moteur, permet de reproduire le fonctionnement du groupe motopropulseur hybride sur un cycle normalisé pour une finalité bien déterminée. Il comporte principalement les éléments suivants :
- un premier moteur électrique (M1) ;
- des moyens (S1, S2) pour simuler en temps réel le fonctionnement du moteur thermique et pour simuler les moyens de commande du moteur thermique ;
- des moyens (PTRI, M2) pour reproduire mécaniquement le régime issu des moyens de simulation sur l'arbre de rotation du premier moteur électrique.

### Premier moteur électrique : moteur électrique de traction (M1)

Le premier moteur électrique est de préférence un moteur basé sur la même technologie (moteur synchrone ou asynchrone, à bobinage, à aimants permanents, ...) que le moteur électrique de traction du GMP. En effet, ce moteur a pour vocation de reproduire le comportement du moteur électrique du GMP que l'on veut étudier. Le premier moteur électrique peut donc être le moteur électrique de traction du GMP lui-même.

Selon un mode de réalisation, le système constitue un banc moteur à petite échelle de puissance, permettant de reproduire le fonctionnement du groupe motopropulseur hybride sur un cycle normalisé pour une finalité bien déterminée. Pour ce faire on utilise un premier moteur électrique correspondant à une échelle réduite du moteur électrique de traction du GMP. On reproduit ainsi le comportement du moteur électrique du GMP que l'on veut étudier, tout en étant de dimension réduite. Il est donc caractérisé par une puissance plus faible que le moteur électrique du GMP, mais par un comportement identique, au moins dans ses tendances. On considère que le comportement est identique quand au moins la cartographie de puissance électrique (régime, couple et pertes), les variations de température, et la dynamique (où le facteur clé est le temps de réponse de la température), du moteur M1 reproduisent - modulo les facteurs d'échelle - ceux du moteur du GMP. On dit que le moteur électrique de notre système reproduit le comportement à l'échelle du moteur électrique réel.

Selon un exemple, ce premier moteur électrique du banc (système), qui simule le moteur électrique de traction du véhicule hybride, est un moteur de puissance de l'ordre de 2 kW, représentant ainsi un facteur de réduction l'ordre de 10 à 20 par rapport au moteur électrique du GMP.

La construction d'un tel moteur électrique nécessite donc une opération de mise à l'échelle. Son but est que le fonctionnement du moteur électrique du GMP hybride réel puisse être représenté par le premier moteur électrique du banc.

Cette étape de mise à l'échelle du moteur électrique est réalisée par des calculs connus des spécialistes, et décrits par exemple dans le document suivant :
Fodorean D., Miraoui, A., Dimensionnement rapide des machines synchrones à aimants permanents (MSAP), Techniques de l'Ingénieur, D 3 554 - 1-22

En particulier, certains facteurs d'échelle sont imposés par l'utilisateur en fonction des limites physiques des moteurs du banc et du moteur du GMP hybride. Par exemple, on impose le rapport entre le couple mesuré sur le banc et les niveaux de couple dans le GMP que l'on veut représenter, et le rapport entre le régime de rotation du banc et celui du moteur du GMP.

En outre, certains facteurs d'échelle géométrique (rapport entre les diamètres, les longueurs, ...) restent fixés par la géométrie connue du moteur du banc et celle du moteur du GMP réel que l'on veut représenter. En fonction de ces facteurs d'échelle imposés, les facteurs d'échelle pour d'autres variables liées aux domaines électrique et thermique, peuvent être prédits.

En conséquence, le comportement du moteur du GMP que l'on veut représenter est reproduit à l'identique de celui du moteur du banc, au moins dans ses tendances, en particulier pour ce qui concerne les courants, le couple, les dynamiques thermiques.

### Moyens de simulation en temps réel

Le système selon l'invention comporte des moyens pour simuler en temps réel :
- le fonctionnement du moteur thermique ;
- les moyens de commande du moteur thermique ;
- la transmission du véhicule ; et
- la dynamique du véhicule;

Les simulations en temps réel fournissent une estimation à l'échelle 1 du couple du moteur thermique réel et du couple résistant du véhicule.

Ces simulations peuvent être réalisées au moyen d'un ordinateur de type PC, comportant un système d'exploitation temps réel, un superviseur de tâches temps réel, et de modules logiciels de simulation en temps réel.

Selon un mode de réalisation, on peut utiliser un PC sous forme de Rack Industriel 4U, avec les caractéristiques suivantes :
- Carte mère PCIE9650-R11 IEI avec Processeur Q6700; Processeur 4 coeurs; Fréquence de fonctionnement : 2,66GHz.
- système d'exploitation temps réel et superviseur de tâches temps réel, permettant d'exécuter des modèles jusqu'à des fréquences de 10 kHz.

Cet ordinateur assure l'exécution de modèles temps réel haute fréquence au moyen de modules logiciels.

Les modules logiciels de simulation en temps réel à l'échelle 1, et embarqués sur le PC sont :
S1. un simulateur de moteur thermique :
   Les entrées sont les signaux de commande, tels que le débit du carburant injecté, ainsi que la vitesse de rotation du moteur. La sortie principale est le couple fourni à l'arbre de transmission. Ce simulateur s'appuie sur des équations physiques du moteur thermique considéré, modélisant à la fois la combustion et la circulation des différents gaz.
S2. un simulateur des moyens de commande du moteur thermique :
   Les entrées sont les mesures GMP et moteur (vitesse, températures, richesse, débits), ainsi que la consigne de couple du moteur thermique, et les estimations des grandeurs non mesurées. Les sorties sont les consignes aux actionneurs de bas niveau (papillon, injection, avance, actionneurs turbo / EGR, &c.) Ce simulateur reproduit les lois de commande du contrôle du moteur thermique.

Le banc comprend en outre les simulateurs suivants, que l'on rencontre dans les bancs réels dits "dynamiques" :
S3. un simulateur de la transmission du véhicule :
   Les entrées sont le couple du moteur thermique, le couple du moteur électrique et la vitesse aux roues. Les sorties sont le couple transmis aux roues et la vitesse du véhicule.
S4. un simulateur de la dynamique du véhicule :
   L'entrée est le couple total aux roues. La sortie est la vitesse de rotation des roues.
   Ce simulateur reproduit la réaction du véhicule en fonction des couples fournis par le moteur thermique simulé et le moteur électrique réel.
S5. un simulateur "conducteur" :
   Les entrées sont la vitesse du véhicule ainsi que la vitesse désirée; la sortie est la position des pédales et donc la consigne de couple total demandé. Ce simulateur reproduit l'action du conducteur sur les pédales et un éventuel levier de vitesse pour suivre un cycle de conduite.
S6. un superviseur énergétique :
   Ce superviseur définit les stratégies permettant de répartir la puissance nécessaire entre le moteur thermique et la moteur électrique. Il génère et coordonne les consignes aux actionneurs du GMP de façon à saturer les degrés de liberté offerts par l'architecture hybride. Dans le cas d'un hybride parallèle à arbre simple (machine électrique en amont de la boîte), un des rôles principaux du superviseur énergétique est de fixer la consigne de couple au moteur thermique et au moteur électrique de telle manière que leur somme soit égale au couple total demandé par le conducteur. En général, les entrés sont la demande de couple désiré, les mesures GMP (en particulier la vitesse du véhicule, les températures, etc.) et les estimations (surtout le SOC). Les sorties sont les consignes aux actionneurs (consignes de couple moteurs/embrayage, de rapport de boîte, de rapport de conversion en cas de convertisseur DC/DC, etc.)

La simulation des éléments précédemment citée est en temps réel, et fonctionne en même temps que le moteur électrique, et cela de façon cohérente, permettant ainsi à cet ensemble constitué à la fois d'éléments réels et logiciels d'avoir un fonctionnement analogue à celui d'un groupe motopropulseur hybride 100% réel.

En fonctionnement, lorsque l'on souhaite que le véhicule considéré suive un cycle de conduite normalisé (celui-ci pouvant être choisi de façon libre), voici les différentes informations échangées par les modules logiciels constitutifs du banc :
E1- Le conducteur, simulé par le simulateur "conducteur" (**S5**) appuie plus ou moins fort sur les pédales d'accélération et de frein, son but étant que la vitesse du véhicule simulé suive au mieux le profil de vitesse (0) sur cycle normalisé (CN). Les actions sur ces pédales sont interprétées comme une demande de couple désiré (1) pour le véhicule. Cette demande est transmise au superviseur énergétique (**S6**)
E2- La mesure du couple réellement appliqué au véhicule (1'), c'est-à-dire la somme algébrique du couple (5) fourni par le simulateur de moteur thermique (**S1**) et du couple (2b') fourni par le moteur de traction (**M1**), est calculée par le simulateur de la transmission du véhicule (**S3**). Ce couple résultant (*Cr*) est fourni au modèle S4. De manière générale, ce couple (**Cr**) diffère du couple demandé (*Cd*), notamment compte tenue des différents éléments (décrits ci-après) à mettre en oeuvre pour qu'un couple soit développé par le moteur thermique et par le moteur électrique.
E3- A partir de ce stade, une partie des informations est simulée, tandis que l'autre partie est issue des différentes mesures réalisées sur le banc. Ces informations sont centralisées sur la plateforme temps réel d'interfaçage (*PTRI*).
   a- une demande de couple désiré sur le moteur thermique (2a) est transmise au simulateur de moteur thermique (**S1**) et au simulateur des moyens de commande du moteur thermique (**S2**). Le simulateur des moyens de commande du moteur thermique (**S2**) prend en compte ces demandes, ainsi que des informations relatives au moteur thermique simulé et issues du simulateur de moteur thermique (**S1**). Le simulateur des moyens de commande du moteur thermique (**S2**) décide par exemple de la quantité de carburant à injecter pour que le simulateur de moteur thermique (**S1**) fournisse le couple désiré. Le simulateur de moteur thermique (**S1**) calcule le couple fourni.
   b- une demande de couple désiré sur le moteur électrique (2b) est transmise à la plateforme temps réel d'interfaçage (*PTRI*) qui la redirige vers l'onduleur OND1, après avoir réalisé une mise à l'échelle si nécessaire, afin que ce couple puisse être produit par le moteur électrique (**M1**) physiquement présent.
   c- le couple réellement fourni (2b') par le moteur électrique (**M1**) est mesuré par un couplemètre (*CP*), et redirigé vers le simulateur de la transmission du véhicule (**S3**), après mise à l'échelle si nécessaire par la plateforme temps réel d'interfaçage (*PTRI*).
E4- Le simulateur de la dynamique du véhicule (**S4**) calcule la vitesse réelle du véhicule (3), à comparer avec la vitesse à suivre sur le cycle. Cette vitesse résulte du couple précédent, mais aussi des différents frottements et résistances aérodynamiques du véhicule.
E5- En fonction du rapport de boîte engagé, à la vitesse du véhicule correspond un régime de rotation des différents éléments de la transmission, et plus particulièrement un régime de rotation du moteur de traction (**M1**). Ce régime de rotation du moteur électrique (4) est simulé par le simulateur de la transmission du véhicule (**S3**).
E6- Ce régime de rotation (4) est envoyé à la plateforme temps réel d'interfaçage (*PTRI*), qui pilote la génératrice (**M2**), via l'onduleur OND3, pour que l'arbre du moteur de traction (**M1**) tourne au régime souhaité.

### Moyens pour reproduire mécaniquement un régime issu de simulations

Selon un mode de réalisation, les moyens pour reproduire mécaniquement le régime issu des moyens de simulation sur l'arbre de rotation du premier moteur électrique, comportent :
- un second moteur électrique muni d'un second arbre de rotation solidaire de l'arbre de rotation du premier moteur électrique; et
- des moyens d'interfaçage (PTRI) en temps réel entre les moyens de simulation et les premier et second moteurs électriques.

### Moyens d'interfaçage (PTRI) en temps réel

Les moyens d'interfaçage constituent une plateforme temps réel, à base de composants logiciels et électroniques, comportant :
- des moyens pour transmettre au premier moteur électrique (M1) la demande de couple désiré pour le premier moteur électrique (M1) ;
- des moyens pour transmettre au simulateur de transmission du véhicule (S3) la mesure du couple réellement fourni par le moteur électrique (M1) ;
- des moyens pour transmettre au second moteur électrique (M2) la demande de régime de rotation issu du simulateur de transmission du véhicule (S3).

Cette plateforme temps réel permet d'interfacer les modules logiciels avec tous les composants électriques et mécaniques du banc.

Dans le mode de réalisation où le premier moteur électrique (M1) correspond à une échelle réduite du moteur électrique de traction, les moyens d'interfaçage (PTRI) en temps réel comportent également des moyens logiciels de prise en compte de cette mise à l'échelle.

Cette plateforme est connectée au premier moteur électrique et au second moteur électrique. Elle centralise les différentes mesures réalisées sur le banc, avec éventuellement un filtrage sélectif pour rejeter les bruits de mesure de couple, régime, position du rotor du moteur, tensions et courants électriques. Cette plateforme fait transiter la demande de couple concernant le moteur électrique de traction vers ce moteur électrique. Elle compare également le régime auquel le moteur électrique de traction doit fonctionner à la valeur mesurée du régime, et demande le couple nécessaire à la génératrice (second moteur électrique du banc) pour que l'arbre de rotation du premier moteur électrique tourne à la valeur de régime souhaité.

Cette plateforme est également connectée à l'ordinateur par une liaison CAN. Elle reçoit également des informations de l'ordinateur concernant le couple qui doit être fourni par le moteur électrique de traction (par liaison CAN) et concernant le régime auquel le moteur électrique de traction doit fonctionner (par liaison CAN).

Selon un exemple, la plateforme temps réel d'interfaçage est le système de contrôle ACEbox© (IFP, France).

### Second moteur électrique : la génératrice (M2)

Au sein du système selon l'invention, le couple du moteur thermique réel et le couple résistant du véhicule sont des valeurs numériques issues de simulations en temps réel (et non des couples physiques). Pour reproduire leur contribution sur l'arbre du moteur électrique de traction à échelle réduite (premier moteur électrique du banc), on peut utiliser un deuxième moteur électrique. Ce deuxième moteur est connecté au premier moteur électrique du banc. On appelle ce second moteur électrique, la génératrice. On peut par exemple utiliser un moteur électrique de puissance de l'ordre de 10% supérieure à celle du premier moteur.

Les arbres de rotation des premier et second moteurs électriques sont solidaires.

Selon un mode de réalisation, on rend solidaire les deux arbres au moyen d'un accouplement semi-rigide (soufflets mécaniques par exemple).

Selon un autre mode de réalisation, on utilise un seul arbre de rotation commun pour les deux moteurs électriques.

Le rôle de ce second moteur électrique (génératrice) est donc de transformer en couple réel, et éventuellement à petite échelle, les valeurs de couples issues de simulations temps réel et à l'échelle 1 du moteur et du véhicule.

Pour ce faire, à partir de la vitesse du véhicule simulé, on calcule le régime de rotation du moteur électrique du GMP hybride réel. Ce régime est obtenu après passage au travers de différents organes mécaniques de démultiplication. Ce régime de rotation est ensuite mis à l'échelle si nécessaire, pour pouvoir être reproduit sur le banc faible puissance grâce au deuxième moteur électrique directement monté sur l'arbre du moteur de traction. Le moteur électrique de traction "voit" l'effet produit par le GMP sur le véhicule, effet qui se manifeste par la vitesse de celui-ci.

### Connectivité : architecture électrique

L'électronique de puissance de pilotage des deux moteurs électriques est constituée de quatre onduleurs. Les fonctionnalités de chaque onduleur sont les suivantes :
- L'onduleur OND1 pilote le moteur électrique de traction M1. Il est connecté d'une part au moteur électrique de traction M1, et d'autre part, à la plateforme temps réel d'interfaçage via une liaison CAN et des voies analogiques.
- L'onduleur OND2 assure deux fonctions : l'émulation de la source d'énergie électrique (batterie ou supercapacité) et la réinjection du courant dans le réseau lorsque le moteur électrique de traction M1 fonctionne en génératrice.
- L'onduleur OND3 pilote le second moteur électrique M2 qui émule le moteur thermique et le comportement du véhicule. Il est connecté d'une part au second moteur M2, et d'autre part, à la plateforme temps réel d'interfaçage via une liaison CAN et des voies analogiques.
- Quant à l'onduleur OND4, il assure la réinjection du courant dans le réseau de distribution électrique (EDF® par exemple) lors du freinage du second moteur électrique M2.

Il est préférable d'insérer un autotransformateur entre le réseau de distribution électrique et l'onduleur OND2, pour permettre à ce dernier de réguler la tension du bus continu de l'onduleur OND1 entre 300V et 400V. Ainsi l'onduleur OND2 est capable d'émuler les fluctuations d'une tension de batterie.

On peut également utiliser un commutateur de source manuel, pour permettre de basculer sur une batterie réelle. Ceci permet de travailler sur la chaine de traction électrique complète dans le banc.

Les onduleurs OND2 et OND4 fonctionnent en mode PFC (Power Factor Corrector) pour assurer un courant sinusoïdal et en phase avec la tension du réseau électrique dans les deux modes de fonctionnement : traction et régénération. Dans ce dernier cas, des circuits LC (inductifs capacitifs) sont utilisés pour filtrer les harmoniques des courants et tensions dus à la modulation PWM.

Les filtres RFI contribuent à réduire le niveau d'émission des signaux radiofréquence sur les câbles d'alimentation entre le réseau de distribution électrique et les onduleurs OND2 et OND4.

Les deux onduleurs OND1 et OND3 sont dédiés uniquement au pilotage des moteurs électriques respectifs M1 et M2. Ces deux onduleurs sont deux plateformes ouvertes, capables de s'adapter à tout type de machine à courant alternatif.

Ainsi, le contrôle bas niveau du couple, la fréquence de la modulation et les acquisitions peuvent être adaptés et optimisés pour tout type de machine électrique. Ceci permet de faire varier les moteurs du banc dans toutes les variétés de technologies de moteurs électriques.

### Exemple particulier de réalisation du banc

Un exemple de réalisation du banc comporte les éléments mécaniques suivants:
- concernant les moteurs électriques:
   - un premier moteur électrique M1, dit de traction, de puissance 1.76 kW, et issu de la gamme UniDrive de Leroy Somer,
   - un second moteur électrique M2, aussi appelé génératrice, de puissance 2.51 kW, également issu de la gamme UniDrive de Leroy-Somer,
- concernant le support mécanique:
   - deux supports (aussi appelés équerre) en métal, un pour chacune des machines, fixés rigidement sur une plaque en aluminium, elle-même rendue solidaire d'un châssis à l'aide des éléments de visserie nécessaires.
- concernant l'accouplement entre les moteurs électriques
   - un accouplement semi-rigide servant à rendre solidaires les axes respectifs de chacune des machines électriques
   - un couplemètre permettant de mesurer le couple mécanique réel sur l'axe de rotation des moteurs électriques

### Utilisation du banc

### Pré-dimensionnement d'un GMP hybride

Ce système permet d'évaluer plusieurs choix possibles pour le moteur du GMP, tout en utilisant un même moteur au banc. A chaque choix, correspond un ensemble de facteurs d'échelle différents, censé reproduire les grandes tendances du comportement statique et dynamique du GMP réel. Ceci permet d'utiliser le système selon l'invention comme un outil de pré-dimensionnement d'un GMP hybride.

### Conception du contrôle du moteur électrique de traction

C'est l'usage le plus évident du système. On s'appuie sur l'idée que l'élément physique est le plus représentatif de la réalité dans un assemblage mi-réel, mi-logiciel. Les essais portent donc naturellement sur cet élément réel. Dans notre cas, l'élément physique réel étant le moteur électrique, l'usage premier du banc est celui où on étudie le moteur électrique d'un GMP hybride connu. Dans ce GMP :
- le moteur thermique est connu ainsi que ses modèles temps réel
- le moteur électrique du GMP est connu

Dans ce contexte, on cherche à concevoir le contrôle du moteur électrique du GMP en faisant des tests sur un moteur identique au moteur du GMP, mais à échelle réduite, et pour lequel les conditions d'usage sont les mêmes - modulo les facteurs d'échelle - que celles du moteur du GMP. L'utilisateur, qui est le concepteur du contrôle de moteur électrique, aura avec le banc à échelle réduite une valeur de consommation de carburant comparable à celle qui serait obtenue sur le banc GMP hybride réel.

### Adaptation de la répartition de puissances aux différents moteurs électriques

Selon cette utilisation, on part d'un module de répartition de puissances défini pour un moteur électrique donné, un moteur thermique donné, et qui, avec les deux modules de contrôle de moteur thermique et contrôle de moteur électrique donnent une consommation de carburant satisfaisante sur un cycle normalisé. On se place ensuite dans le contexte où, en faisant varier le moteur électrique dans sa gamme, on souhaite conserver la meilleure répartition de puissances possible, c'est-à-dire trouver celle qui continue à donner une valeur de consommation de carburant satisfaisante malgré le changement de la place du moteur électrique dans sa gamme (moteur avec la même technologie de fabrication, mais avec des dimensions différentes, donc de puissance différente).

En faisant varier les facteurs de mise à l'échelle du moteur électrique de traction du banc, on émule d'autres moteurs électriques dans la gamme considérée, ce qui permet d'adapter la répartition de puissances pour qu'elle reste optimale malgré la variation de dimensions du moteur électrique.

Ainsi un autre usage du banc à petite échelle de puissance est l'aide à la mise au point du module de répartition optimale de puissances. La mise au point est celle qui s'adapte aux changements de dimensions du moteur électrique par exemple. La détermination d'une stratégie de répartition de puissances optimale pour chaque choix de dimensionnement du moteur électrique du GMP permet d'évaluer et de comparer des choix différents mais toujours dans leurs meilleures conditions de fonctionnement.

## Revendications

1. Système d'étude d'un groupe motopropulseur pour un véhicule hybride équipé d'un moteur thermique et d'un moteur électrique de traction, **caractérisé en ce qu'**il comporte :
- un premier moteur électrique (M1) ;
- des moyens (S1, S2) pour simuler en temps réel un fonctionnement dudit moteur thermique et pour simuler des moyens de commande dudit moteur thermique ;
- des moyens (PTRI, M2) pour reproduire mécaniquement un régime issu des moyens de simulation sur un arbre de rotation dudit premier moteur électrique.

2. Système selon la revendication 1, dans lequel les moyens pour reproduire un régime comportent un second moteur électrique (M2) muni d'un second arbre de rotation solidaire de l'arbre de rotation dudit premier moteur électrique, et des moyens d'interfaçage (PTRI) en temps réel entre lesdits moyens de simulation et lesdits premier et second moteurs électriques.

3. Système selon la revendication 2, dans lequel lesdits moyens d'interfaçage (PTRI) comportent :
- des moyens pour transmettre audit premier moteur électrique (M1) une demande de couple désiré pour le premier moteur électrique (M1) ;
- des moyens pour transmettre à un simulateur de transmission du véhicule (S3) une mesure d'un couple réellement fourni par le moteur électrique (M1) ;
- des moyens pour transmettre audit second moteur électrique (M2) une demande de régime de rotation issu dudit simulateur de transmission du véhicule (S3).

4. Système selon l'une des revendications 2 à 3, dans lequel lesdits moyens d'interfaçage (PTRI) comportent un premier moyen électronique de commande (OND1) connecté audit premier moteur électrique (M1), et un second moyen électronique de commande (OND3) connecté audit second moteur électrique (M2).

5. Système selon la revendication 4, dans lequel lesdits moyens électroniques de commande comportent au moins un onduleur.

6. Système selon l'une des revendications précédentes, dans lequel les moyens de simulation en temps réel comportent un ordinateur muni d'un système d'exploitation temps réel, un superviseur de tâches temps réel, et des modules logiciels simulant en temps réel le fonctionnement dudit moteur thermique (S1), lesdits moyens de commande dudit moteur thermique (S2), une transmission dudit véhicule (S3) et une dynamique dudit véhicule (S4).

7. Système selon l'une des revendications précédentes, dans lequel au moins un des axes de rotation desdits moteurs électriques est équipé d'un couplemètre (CP) permettant de mesurer un couple mécanique réel sur lesdits axes de rotation.

8. Système selon l'une des revendications précédentes, dans lequel ledit premier moteur électrique (M1) correspond à une échelle réduite dudit moteur électrique de traction, les moyens (PTRI, M2) pour reproduire un régime comportent des moyens logiciels de prise en compte de la mise à l'échelle dudit moteur électrique de traction.

9. Système selon la revendication 8, dans lequel ledit premier moteur électrique (M1) est à une échelle réduite d'un facteur de réduction de l'ordre de 10 à 20 par rapport au moteur électrique de traction.

10. Système selon la revendication 9, dans lequel ledit premier moteur électrique (M1) est un moteur électrique de puissance de l'ordre de 2 kW.
